# EUROPEAN PATENT APPLICATION

(11) **EP 2 740 768 A1**
(43) Date of publication of application: **11.06.2014**
(21) Application number: 12820353.6
(22) Date of filing: 27.07.2012
(51) Int. Cl.: C08L 93/00, B27N 3/00, C08K 5/1545, C09J 11/00, C09J 105/00, C09J 171/10

(54) **CONDENSED TANNIN-CONTAINING COMPOSITION WHICH IS CURED BY APPLICATION OF HEAT AND PRESSURE**

(30) Priority: 03.08.2011 JP 2011169757
(71) Applicant: Kyoto University, Kyoto-shi, Kyoto 606-8501 (JP)
(72) Inventor: UMEMURA, Kenji, Uji-shi Kyoto 611-0011 (JP)
(74) Representative: Morf, Jan Stefan
(86) International application number: PCT/JP2012/069169
(87) International publication number: WO 2013/018707

(57) **Abstract**

Provided are a composition from which a biomass material can be obtained with low energy through a simple process and facility, a formed body obtained from the composition, and a method for producing the formed body. A composition according to the present invention is a composition to be cured by applying heat/pressure thereto, the composition including an element in the form of powder or small pieces, and 8% by weight or more of condensed tannin and 8% by weight or more of a saccharide selected form the group consisting of a monosaccharide and an oligosaccharide. The saccharide is preferably sucrose, glucose, fructose, maltose, xylose, or lactose. Preferably, the composition further includes an acid catalyst.

## Description

### TECHNICAL FIELD

The present invention relates to a composition which can be used as a raw material for a formed body (a cured body such as a molding and a particleboard) and an adhesive and does not require a fossil resource, a formed body made from the composition, and a method of producing a formed body.

### BACKGROUND ART

Recently, in order to prevent global warming and to reduce consumption of a fossil resource, a so-called bioplastic made from a biological resource have been actively developed in place of a resin made from the fossil resource. Although various raw materials including polylactic acid have been investigated, in order to ensure a sufficient performance, chemical modification using a fossil resource-derived compound and use of an agent corresponding to a poisonous substance/deleterious substance have been essential. When the development procedure described above is used, a bioplastic being safe and made from a 100% biological resource has been difficult to be produced even if a material reducing environmental burden can be produced.

For example, as described in Non-Patent Document 1, many studies in which condensed tannin contained in a bark or the like is used as a raw material of an adhesive in a field of wood bonding have been carried out. These studies use the fact that tannin has a flavonoid structure and this structure has high reactivity to formaldehyde. An adhesion technique that uses a compound made of tannin and a formaldehyde compound or an initial condensate of tannin and a formaldehyde-based resin has been already established and has been used in a practical use from the past. The use of formaldehyde has, however, a large load on a human body and an environment, and causes sick house syndrome. As a result, recently, the use of formaldehyde has tended to be reduced. Therefore, a curing method using an amine-based compound such as hexamethylenetetramine has been proposed and active studies have been developed.

As described above, use of a formaldehyde-based compound and an amine-based compound has been proposed as a curing method of tannin. These compounds are, however, substances derived from a fossil resource. Therefore, it cannot be said that a traditional tannin resin is derived from 100% biomass. The tannin resin is compensated by a substance derived from a fossil resource. The formaldehyde-based compound may often be a deleterious substance and the amine-based compound also may often be a harmful substance. Therefore, these compounds may cause an adverse effect on an environment or a human body, and improvement of safety of the tannin resin has limitation as long as these compounds are used. Given a future global environment and finiteness of the fossil resource, it is strongly desired a method for curing tannin in which substances having high safety and derived from only biomass are used.

The present inventor has carried out the study for obtaining a plastic-like formed body (a plastic-like molding) and a woody formed body (such as a particleboard) without using a fossil resource-derived substance (Patent Document 1). The invention according to Patent Document 1 is a composition to be cured by applying heat/pressure thereto, the composition including (a) a plant-derived material in the form of powder or small pieces and (b) a polycarboxylic acid as the main components and a saccharide (c) as an optional component. In Example 10 in Patent Document 1, the present inventor demonstrates that a polycarboxylic acid is reacted with a component other than tannin.

The invention according to Patent Document 1 is excellent in that a plastic-like molding can be obtained without using the fossil resource-derived substance. This invention, however, has a problem of versatility, because a substance derived from a non-fossil resource other than a plant-derived material cannot be used as a main component. In order to achieve practical use in an industrial scale, it is desired that the plastic-like molding can be obtained by only applying heat/pressure (hot press) even when the non-fossil resource-derived substance other than the plant-derived material is used as a raw material.

### PRIOR ART DOCUMENTS

### PATENT DOCUMENT

Patent Document 1: WO No. 2011/001988

### NON-PATENT DOCUMENT

Non-Patent Document 1: A. Pizzi: J. Adhesion Sci. Technol., 20(8), 829-846 (2006)

### SUMMARY OF THE INVENTION

### PROBLEMS TO SOLVED BY THE INVENTION

Thus, an object of the present invention is to provide a composition that can produce a biomass material with a simple process/facility and that can be cured without a fossil resource substance when a plant-derived material is used as an element (supporting substrate) or when a non-plant-derived material is used as an element, and to provide a plastic-like molding produced from the composition and a method for producing the same.

### MEANS FOR SOLVING THE PROBLEMS

The present inventor has intensively studied in order to solve the problems described above, and has found that condensed tannin is reacted with a saccharide selected from a monosaccharide and an oligosaccharide, and when an element (a substrate) is a plant-derived material or a non-plant-derived material, the element is cured by applying heat/pressure (hot press) to form a plastic-like formed body (a plastic-like molding) and a woody formed body (such as a particleboard) when the condensed tannin and the saccharide are added. The present inventor has ascertained that a material containing condensed tannin in a high content (such as an acacia bark powder) is also cured by adding the saccharide selected from a monosaccharide and an oligosaccharide and applying heat/pressure. Thus, the present invention has been completed.

More specifically, the present invention provides a composition to be cured by applying heat/pressure thereto, including an element in the form of powder or small pieces, and 8% by weight or more of condensed tannin and 8% by weight or more of a saccharide selected from the group consisting of a monosaccharide and an oligosaccharide.

The composition according to the present invention does not require a fossil resource and is therefore environmentally friendly, and can easily form a biomass formed body since the composition can be cured only by applying heat/pressure. The composition can also be used as an adhesive raw material.

The present inventor has further studied about an additive for accelerating curing, and as a result, has succeeded in acceleration of curing by adding an acid catalyst.

Therefore, the composition according to the present invention preferably further includes an acid catalyst.

### EFFECT OF THE INVENTION

According to the present invention, since there is no need to use a fossil resource, a plastic-like formed body (a plastic-like molding) and a woody formed body can be obtained without causing an environmental burden. Also, there is no need to use a formaldehyde-based compound which may cause sick house syndrome, and thus, the composition of the present invention ensures high safety to the human body. Also, the present invention has high versatility because the production process is simple and a formed body (a cured body such as a molding and a particleboard) can be produced even when a substance other than a plant-derived material is used as an element.

### MODE FOR CARRYING OUT THE INVENTION

The composition according to the present invention includes condensed tannin as an essential component. The condensed tannin is also called catechol tannin, and molecules of catechin which is a kind of polyphenol are bonded by C-C bonds to each other to form a large molecule. Examples of the condensed tannin include Wattle Tannin contained in a bark part of acacia in high content and Quebracho Tannin contained in a wood part of quebracho in high content. In the present invention, preferable condensed tannin is Wattle Tannin

The composition according to the present invention includes 8% by weight or more of condensed tannin. The content ratio is more preferably 10 to 50% by weight, particularly preferably 15 to 40% by weight, and further preferably 20 to 35% by weight. The condensed tannin may be added as an isolated component or may be added as contained in an element (for example, a plant-derived material). In other words, when a substance that sufficiently includes condensed tannin in itself such as an acacia bark is used as an element, whether condensed tannin is newly added or not may be optionally selected if 8% by weight or more of condensed tannin is included in the whole composition. However, when a substance not including condensed tannin or a substance including condensed tannin in low content is used as an element, a concentration of condensed tannin in the composition is needed to be 8% by weight or more by further adding condensed tannin.

The composition according to the present invention includes a saccharide selected from the group consisting of a monosaccharide and an oligosaccharide (hereinafter in the present specification, also referred to as monosaccharide/oligosaccharide) as an essential component. Examples of the monosaccharide include fructose, glucose, ribose, arabinose, rhamnose, xylulose, xylose, and deoxyribose. Examples of the oligosaccharide include a disaccharide such as sucrose, maltose, lactose, trehalose, and turanose, and a trisaccharide such as raffinose. Examples of the preferable saccharide in the present invention include fructose, glucose, sucrose (sugar), maltose, xylose, and lactose. Examples of the particularly preferable saccharide includes fructose, glucose, sucrose, and xylose.

The composition according to the present invention includes 8% by weight or more of saccharide selected from the group consisting of a monosaccharide and an oligosaccharide. The content ratio is more preferably 10 to 50% by weight, particularly preferably 13 to 35% by weight, and further preferably 15 to 30% by weight. Similar to the condensed tannin described above, the saccharide may be added as an isolated component or may be added as contained in an element. For example, when a material that originally includes sucrose in high content such as bagasse (residue of sugarcane after squeezing) is used as an element, whether the saccharide is newly added or not may be optionally selected if 8% by weight or more of the saccharide is included in the whole composition. However, when a substance not including the monosaccharide or the oligosaccharide or a substance including the monosaccharide or the oligosaccharide in low content is used as a raw material, a concentration of the saccharide in the composition is needed to be 8% by weight or more by further adding the saccharide.

It is preferable that the composition according to the invention further includes an acid as a catalyst. The acid catalyst may be an organic acid or an inorganic acid. For example, as the acid catalyst, a carboxylic acid (for example, formic acid, acetic acid, citric acid, itaconic acid, and benzoic acid), a phosphoric acid, a mineral acid (for example, hydrochloric acid and sulfuric acid), a sulfonic acid, and a Lewis acid (for example, aluminum chloride) can be used. The acid catalyst may be added in the form of an acid or in the form of a salt. Preferable examples of the acid catalyst include a carboxylic acid and a phosphoric acid, and a salt thereof. Particularly preferable examples of the acid catalyst include citric acid, sodium dihydrogen phosphate, and disodium hydrogen phosphate.

The acid catalyst is preferably added so that a content ratio of the acid catalyst in the composition is 0.5% by weight or more. The acid catalyst does not need to be added in a large amount because a catalytic function has the upper limit. However, when the acid catalyst is reacted with a substance other than condensed tannin in the composition, the content ratio described above may vary. As the catalyst, the content ratio is more preferably 1.0% to 10% by weight, particularly preferably 1.3 to 5.0% by weight, and further preferably 1.5 to 3.0% by weight.

The composition according to the present invention may include a polycarboxylic acid (for example, citric acid or itaconic acid) as the acid catalyst. However, the composition according to the present invention is different from the composition disclosed in Patent Document 1 in that the polycarboxylic acid is not a main component, and therefore, sufficient curing acceleration effect can be obtained even when an amount of the polycarboxylic acid contained in the composition is small (for example, less than 7% by weight, less than 5% by weight, or less than 3% by weight). Sufficient curing acceleration effect can also be obtained when an acid other than the polycarboxylic acid is used as the acid catalyst.

An element included in the composition according to the present invention is preferably a substance not derived from a fossil resource. Examples of the element includes a plant-derived material and an inorganic material such as calcium carbonate.

In the present invention, the plant-derived material means those obtained from xylem, bark, seeds, and leaves of trees and plants, and may be a plant powder (for example, bark powder), a fiber which is available in a market, or a chip obtained by grinding a recycled material. It may also be a material derived from one kind of plant, or may be a mixture of materials derived from plural kinds of plants. Also, a product processed once from a plant raw material (such as a filter paper) can be used as a plant-derived material. The plant-derived material in the present invention may be in the form of a powder (including granules) or in the form of small pieces (including fibers). However, when the plant-derived material is larger, curing requires longer time, higher temperature, and higher pressure.

Examples of the element other than the plant-derived material include silicic acid, a silicate salt, clay, talc, a metal powder, and a metal oxide, in addition to the calcium carbonate.

The element preferably has a maximum length of 10 mm or less and a thickness of 1 mm or less. Preferable examples of the element include small pieces which pass through a 30 mesh sieve and a powder which passes through a 60 mesh sieve. When shorter heat/pressure time is desired, an element in the form of a powder is preferably used.

When an element in the form of small pieces is intended to be cured, condensed tannin and a monosaccharide/oligosaccharide (and optionally an acid catalyst) are dissolved or dispersed in a solvent (such as water) and this liquid and the element in the form of small pieces are mixed (and dried, if necessary) and pressurized, and thereby an element having a larger size can be easy to be cured.

As a weight ratio of the condensed tannin to the monosaccharide/oligosaccharide in the composition according to the present invention, a weight ratio of the monosaccharide/oligosaccharide is preferably in a range of 0.2 to 5.0 to a weight ratio of condensed tannin of 1. When the weight ratio deviates from the above range, it becomes difficult to cure and, even when curing can be performed, the strength and water resistance deteriorate. The weight ratio of the condensed tannin to the monosaccharide/oligosaccharide is preferably 1.0 : 0.3 to 3.5, particularly preferably 1.0 : 0.4 to 3.0, and further preferably 1.0 : 0.5 to 2.0.

The composition according to the present invention can contain other component other than each constituent (the element, the condensed tannin, the monosaccharide/oligosaccharide, and the catalyst) described above. A content ratio of the other component is, however, preferably 15% by weight or less, more preferably 10% by weight or less, and particularly preferably 5% by weight or less.

Here, with respect to each constituent (the element, the condensed tannin, the monosaccharide/oligosaccharide, and the acid catalyst), the specific types, compound names, weight percentages, and weight ratios are described in the previous paragraphs. The composition according to the present invention includes a composition obtained in an appropriate combination of these specific types, compound names, weight percentages, and weight ratios. Also, regarding each constituent, a plurality of ranges in percent by weight or ranges in weight ratio are described. The upper limit values and lower limit values of such ranges can be appropriately combined.

The above composition is useful as a raw material of a molding composition and an adhesive for wood. In order to produce a molding from the molding composition, the composition may be charged in a die, and then heated from 160°C to 250°C and applied pressure from 5 kgf/cm² to 70 kgf/cm² (from about 0.5 MPa to 7 MPa). In order to produce a plywood using the above composition, the composition may be interposed between veneer sheets for plywood, and then heated from 160°C to 250°C and applied pressure from 5 kgf/cm² to 50 kgf/cm² (from about 0.5 MPa to 5 MPa). The heating temperature can be appropriately controlled and is suitably from 180°C to 220°C. The pressure can be appropriately controlled. However, when the above composition is used as a molding composition and a molding is produced, the pressure is particularly preferably from 30 to 50 kgf/cm² (from about 3 MPa to 5 MPa), and when the above composition is used as an adhesive and a plywood is produced, the pressure is particularly preferably from 10 to 20 kgf/cm² (from about 1 MPa to 2 MPa). Appropriate time for applying pressure to the heated composition varies depending on an amount of the composition, a size of the element, absence or presence of the acid catalyst, desired product strength, heating temperature, and pressure, and thus, the time is appropriately adjusted in consideration of these conditions. Generally, a stronger product can be obtained by prolonging the pressurizing time. Therefore, the pressurizing time is preferably 30 seconds or more, more preferably 1 minute or more, and particularly preferably 5 minutes or more. On the other hand, increase in product strength caused by increasing pressurizing time has upper limit, and therefore, too long pressurizing time is not desired because of production cost. Generally, sufficient pressurizing time is within 20 minutes (10 minutes depending on a product). The above temperature, pressure, and time can be appropriately combined and the upper limits and the lower limits of the value ranges can also be appropriately combined.

In order to produce a molding from the composition according to the present invention, various molding methods such as an injection molding method, an extrusion molding method, a compression molding method, and a transfer molding method can also be used. All of the condensed tannin, the monosaccharide/oligosaccharide, and the acid catalyst are melted and flowable under high temperature. Therefore, when a component that is melted and is flowable under high temperature is used as other component configuring the composition, a molding can be produced by using various molding machines that are commonly used. The injection molding method is a method in which a heated and melted material is injected into a mold and the material is cooled and solidified to obtain a molding. The extrusion molding method is a method in which a material is compressed and extruded through a mold called a die to form a molding having a cross-sectional surface having a required shape. At this time, pressure is applied to the material in a heated state. Therefore, when the composition according to the present invention is used, the composition is cured by such heat/pressure and a plastic-like molding is obtained.

According to the present invention, a formed body (a cured body) such as a particleboard can also be produced. When the particleboard is produced by the present invention, a solution containing the condensed tannin and the monosaccharide/oligosaccharide (and optionally the acid catalyst) together may be added to the element in the form of small pieces (for example, an element in the form of small pieces having a maximum length of 50 mm or less and a thickness of 10 mm or less) (and dried if necessary), and the mixture is cured by applying heat/pressure, or solutions containing each of these components are separately prepared and added to the element (and dried if necessary), and the mixture is cured by applying heat/pressure. From the viewpoint of homogeneous mixing of the condensed tannin and the monosaccharide/oligosaccharide (and optionally the acid catalyst) and simplification of the process, the solution containing these components together is preferably used.

In a method for producing the above formed body such as a particleboard, when the acid catalyst is not added, the above solution is preferably added so that an amount of the condensed tannin is 1.5 to 20 parts by weight (more preferably 2.0 to 15 parts by weight) and an amount of the monosaccharide/oligosaccharide is 5 to 25 parts by weight (more preferably 5.0 to 15 parts by weight) as an additive amount of each component, to 100 parts by weight of the element in the form of small pieces (the above parts by weight mean parts by weight in terms of solid content). When the acid catalyst is added, the solution is preferably added so that an amount of the condensed tannin is 1.5 to 10 parts by weight (more preferably 2.0 to 7.0 parts by weight), an amount of the monosaccharide/oligosaccharide is 5 to 25 parts by weight (more preferably 5.0 to 15 parts by weight), and an amount of the acid catalyst is 1.5 to 10 parts by weight (more preferably 2.0 to 7.0 parts by weight) as an additive amount of each component, to 100 parts by weight of the element in the form of small pieces (the above parts by weight mean parts by weight in terms of solid content). Regarding each component, a plurality of ranges in parts by weight are described. These and the upper limit values and lower limit values of these can be appropriately combined. Generally, the element in the form of small pieces is difficult to cure compared with the element in the form of a powder, and therefore, use of the acid catalyst at the same time is preferable.

When a plant originally containing sucrose in high content such as bagasse is used as an element, an amount of the monosaccharide/oligosaccharide added may be reduced or the monosaccharide/oligosaccharide may not be added.

The appropriate method for adding the solution to the element in the form of small pieces includes a method for spraying the above solution to the above element.

When a formed body such as a particleboard is produced by the present invention, applying heat/pressure is commonly carried out by an upper and lower press using hot plates (heating platens). Usually, since the thickness of the particleboard is controlled using a distance bar (a thickness regulating jig for regulating a distance between upper and lower hot plates), a set pressure of a press machine does not agree with a pressure actually applied to an element. Therefore, the set pressure may be adjusted to the pressure, which enables sufficient compression of the element, or more. Specifically, the pressure may be a pressure (about 4 MPa to 7 MPa [about 40 to 70 kgf/cm²]) which is nearly the same as that in the production of a particleboard by a conventional method, and may be appropriately adjusted by a target density etc. of a board to be produced, similarly to the conventional method. Similar to the above, the temperature upon hot plate press is appropriately from 160°C to 250°C, and more preferably from 180°C to 220°C. Press time is appropriately adjusted in accordance with a product desired to be produced. Similar to the above, generally, a stronger product can be obtained by prolonging pressurizing time. However, increase in product strength has upper limit, and therefore, too long pressurizing time is not desired. Usually, the pressurizing time is appropriately 30 seconds to 20 minutes, and more preferably 1 minute to 10 minutes.

The above temperature, pressure, and time can be appropriately combined and the upper limits and the lower limits of the value ranges can also be appropriately combined.

### EXAMPLES

The present invention will be described in more detail with reference to Examples. However, the present invention is not limited to Examples.

Materials used in experiments, a method for preparing a composition, a method for producing a molding, and a method for evaluating water resistance are as follows.

### [Raw materials]

- Tannin: Each tannin was a power and had a particle size of 100 mesh pass
   Tannic acid ME (Wattle Tannin, manufactured by Fuji Chemical Industry Co., Ltd.)
   Tannic acid KT (Quebracho Tannin, manufactured by Fuji Chemical Industry Co., Ltd.)
   Tannic acid (hydrolyzable tannin, manufactured by Fuji Chemical Industry Co., Ltd.)
- Saccharide
   Monosaccharide: glucose, fructose, and xylose
   Disaccharide: sucrose, maltose, and lactose,
   Polysaccharide: dextrin
- Element (substrate): each element was a power and had a particle size of 60 mesh pass

### (1) Plant-derived material

Acacia bark powder, acacia wood powder, cellulose filter paper powder, cedar bark powder, rice husk powder, and bamboo powder

### (2) Non-plant-derived material

Calcium carbonate powder

### • Acid catalyst

Citric acid and sodium dihydrogen phosphate

### [Preparation of composition]

(1) When a plant-derived material that contained a small amount of condensed tannin (including in the case of containing no condensed tannin at all) or a non-plant-derived material that did not contain condensed tannin was used as an element, a power-like composition was prepared by using tannin, a saccharide, and optionally an acid catalyst.
(2) When the acacia bark powder was used as an element, a power-like composition was prepared by not adding condensed tannin and using a saccharide, and optionally an acid catalyst.

The composition of the above acacia bark powder (product name: Koshitite P, sales origin: Koshii Wood Solutions Co., Ltd.) is 30.0% by weight of condensed tannin, 44.7% by weight of lignin, 20.3% by weight of holocellulose, and 5.0% by weight of ash.

### [Preparation method of composition]

(1) Powder mixing: When materials were mixed in a power state, sizes of all components were 60 mesh pass and all the components were shaking and stirring in a plastic cup.
(2) Wet mixing: In order to further homogeneously mix an element and other components (saccharide, and optionally tannin and an acid catalyst), the above other components were dissolved in warm water and this aqueous solution and the element were mixed, and thereafter, the mixture was dried in an oven to remove water.

### [Heat/pressure treatment(hot press)]

The prepared powder-like composition was filled in a cylindrical mold (inner diameter 7cm/ height 3 cm) and a molding was produced by applying heat/pressure using a hot press under predetermined conditions.

### [Method for evaluating water resistance]

The produced molding was treated in boiling water for 4 hours, and thereafter, the molding was dried at about 105°C. A ratio of weight loss was calculated from weights of the molding before and after the boiling. The smaller the ratio of weight loss is, the higher the water resistance is.

### [Example 1] Curing experiment

A cellulose filter paper powder (made of almost 100% cellulose) was used as an element, and a composition containing Wattle Tannin (represented as tannin acid ME in Tables) being condensed tannin and an oligosaccharide (sucrose) was prepared (sample 1). Not condensed tannin but lignin and sucrose were added to the cellulose filter paper powder to prepare a composition (sample 2). A composition was prepared by adding only condensed tannin to the cellulose filter paper powder (sample 3). A composition made by adding tannic acid (gallnut tannin) being hydrolyzable tannin and sucrose to an acacia wood powder (scarcely containing condensed tannin) was prepared (sample 4).

Moldings were prepared by applying heat/pressure to these compositions under the conditions shown in Table 1, and water resistance was evaluated. The results are shown in Table 1.

**[Table 1]**

| Sample No. | 1 | 2 | 3 | 4 |
|---|---|---|---|---|
| Element | Cellulose powder 5 g | Cellulose powder 5 g | Cellulose powder 1 g | Acacia wood powder 1.8 g |
| Tannin (condensed-type or hydrolyzable-type) | Tannic acid ME 4 g | - | Tannic acid ME 4 g | Tannic acid 1.8 g |
| Lignin | - | Organosoluble lignin 3 g | - | - |
| Monosaccharide/oligosaccharide | Sucrose 2 g | Sucrose 3 g | - | Sucrose 1.8 g |
| Preparation method | Wet mixing | | Powder mixing | Powder mixing |
| | • Dissolving saccharide and tannin or lignin in 10 g of water (hot water bath) | | | |
| | • Mixing the water solution with cellulose powder, followed by drying at 60°C for 15 hours and further at 100°C for 1 hour | | | |
| Hot-press conditions | 200°C 4 MPa [40.8 kgf/cm²] 10 minutes | | | |
| State after hot-press | Black and hard molding | Black and brittle molding | Black and brittle molding | Black and brittle molding |
| Ratio of weight reduction after four-hour boiling (%) | 10.39 | Disintegrated | Disintegrated | Disintegrated |

As shown in Table 1, the composition made by adding Wattle Tannin and sucrose to cellulose filter paper powder (sample 1) was cured by applying heat/pressure thereto (a black plastic-like molding was obtained). A ratio of weight reduction after 4-hour boiling treatment of the sample 1 was about 10%, and the sample 1 had excellent water resistance. On the contrary, all of the composition not containing tannin (sample 2), the composition not containing sucrose (sample 3), and the composition containing not condensed tannin but hydrolyzable tannin (sample 4) provided brittle moldings even when heat/pressure were applied to the compositions, and the moldings could not maintain their shapes after the boiling treatment.

From these results, it is believed that the element was cured by a reaction of the condensed tannin and the saccharide.

### [Example 2] Study on weight ratio of condensed tannin and monosaccharide/oligosaccharide

A plurality of compositions having a different mixing ratio were prepared by using the cellulose filter paper powder, Wattle Tannin and sucrose. Moldings thereof were produced under conditions shown in Table 2 and water resistance of the moldings was evaluated. The results are shown in Table 2. Ratios of condensed tannin and sucrose listed in Table 2 are ratios in weight.
[Table 2]

**Table 2 Study on weight ratio of condensed tannin and monosaccharide/oligosaccharide**

| Sample No. | 5 | 1 | 6 | 7 | 8 |
|---|---|---|---|---|---|
| Element | Cellulose powder 5 g | Cellulose powder 5 g | Cellulose powder 5 g | Cellulose powder 5 g | Cellulose powder 5 g |
| Condensed tannin | Tannic acid ME 5 g | Tannic acid ME 4 g | Tannic acid ME 3 g | Tannic acid ME 2 g | Tannic acid ME 1 g |
| Monosaccharide/oligosaccharide | Sucrose 1 g | Sucrose 2 g | Sucrose 3 g | Sucrose 4 g | Sucrose 5 g |
| Content ratio of condensed tannin (wt%) | 45.5% | 36.4% | 27.3% | 18.2% | 9.1% |
| Content ratio of monosaccharide/oligosaccharide (wt%) | 9.1% | 18.2% | 27.3% | 36.4% | 45.5% |
| Condensed tannin : Monosaccharide/oligosaccharide | 1:0.2 | 1:0.5 | 1:1 | 1:2 | 1:5 |
| Preparation method | Wet mixing | | | | |
| | • Dissolving saccharide and tannin in 10 g of water (hot water bath) | | | | |
| | • Mixing the water solution with cellulose powder, followed by drying at 60°C for 15 hours and further at 100°C for 1 hour | | | | |
| Hot-press conditions | 200°C 4 MPa [40.8 kgf/cm²] 10 minutes | | | | |
| State after hot-press | Black and hard molding | Black and hard molding | Black and hard molding | Black and hard molding | Black and hard molding |
| Ratio of weight reduction after four-hour boiling (%) | 38.12 | 10.39 | 13.5 | 20.36 | 32.01 |

As shown in Table 2, any compositions in which a weight ratio of sucrose to 1.0 of condensed tannin was in a range from 0.2 to 5.0 were cured by applying heat/pressure thereto to form plastic-like moldings. Particularly, the compositions having a weight ratio of condensed tannin : sucrose of 1.0 : 0.5 to 1.0 had excellent water resistance.

### [Example 3] Study on content ratio of condensed tannin and monosaccharide/oligosaccharide

Compositions were prepared by using the cellulose filter paper powder, Wattle Tannin and sucrose so that a content ratio of Wattle Tannin or sucrose was 10% by weight or 50% by weight. Moldings thereof were produced by applying heat/pressure under conditions shown in Table 3 and water resistance of the moldings was evaluated. The results are shown in Table 3.
[Table 3]

**Table 3 Study on content ratio of condensed tannin and monosaccharide/oligosaccharide**

| Sample No. | 9 | 10 | 11 | 12 |
|---|---|---|---|---|
| Element | Cellulose powder 5 g | Cellulose powder 5 g | Cellulose powder 5 g | Cellulose powder 5 g |
| Condensed tannin | Tannic acid ME 0.89 g | Tannic acid ME 3 g | Tannic acid ME 3 g | Tannic acid ME 8 g |
| Monosaccharide/oligosaccharide | Sucrose 3 g | Sucrose 8 g | Sucrose 0.89 g | Sucrose 3 g |
| Content ratio of condensed tannin (wt%) | 10.0% | 18.8% | 33.7% | 50.0% |
| Content ratio of monosaccharide/oligosaccharide (wt%) | 33.7% | 50.0% | 10.0% | 18.8% |
| Condensed tannin : Monosaccharide/oligosaccharide | 1:3.4 | 1:2.7 | 1:0.3 | 1:0.38 |
| Preparation method | Powder mixing | Powder mixing | Powder mixing | Powder mixing |
| Hot-press conditions | 200° 4 MPa [40.8 kgf/cm²] 10 minutes | | | |
| State after hot-press | Black and hard molding | Black and hard molding | Black and hard molding | Black and hard molding |
| Ratio of weight reduction after four-hour boiling (%) | 19.52 | 22.22 | 19.11 | 12.25 |

As shown in Table 3, any compositions were cured by applying heat/pressure thereto to form plastic-like moldings. A ratio of weight reduction in each molding after boiling treatment was 25% or less. From these results, it was found that even when the content ratio of Wattle Tannin or sucrose was varied in a range from 10 to 50% by weight, the plastic-like molding could be obtained.

### [Example 4] Change in types of elements derived from plants

Various elements derived from plants (any of them containing lignocellulose as a main component and scarcely containing condensed tannin and monosaccharide/oligosaccharide), condensed tannin, and sucrose were used to prepare samples having compositions shown in Table 4. Moldings were produced from these samples under conditions shown in Table 4 and water resistance of the moldings was evaluated. Wattle Tannin (Tannic acid ME) or Quebracho Tannin (Tannic acid KT) was used as the condensed tannin. The results are shown in Table 4.
[Table 4]

**Table 4 Change in element**

| Sample No. | 13 | 14 | 15 | 16 | 17 | 18 | 19 |
|---|---|---|---|---|---|---|---|
| Element | Acacia wood power 10 g | Acacia wood power 10 g | Acacia wood power 10 g | Rice husk powder 10 g | Bamboo powder 10 g | Cedar wood powder10 g | Cedar wood powder10 g |
| Condensed tannin | Tannic acid KT 2 g | Tannic acid ME 2 g | Tannic acid ME 4 g | Tannic acid ME 2 g | Tannic acid ME 2 g | Tannic acid KT 2 g | Tannic acid ME 2 g |
| Monosaccharide/ oligosaccharide | Sucrose 2 g | Sucrose 2 g | Sucrose 4 g | Sucrose 2 g | Sucrose 2 g | Sucrose 2 g | Sucrose 2 g |
| Content ratio of condensed tannin (wt%) | 14.3% | 14.3% | 22.2% | 14.3% | 14.3% | 14.3% | 14.3% |
| Content ratio of monosaccharide/ oligosaccharide(w t%) | 14.3% | 14.3% | 22.2% | 14.3% | 14.3% | 14.3% | 14.3% |
| Condensed tannin : Monosaccharide/ oligosaccharide | 1:1 | 1:1 | 1:1 | 1:1 | 1:1 | 1:1 | 1:1 |
| Preparation method | Powder mixing | Powder mixing | Powder mixing | Powder mixing | Powder mixing | Powder mixing | Powder mixing |
| Hot-press conditions | 200°C 4 MPa [40.8 kgf/cm²] 10 minutes | | | | | | |
| State after hot-press | Black and hard molding | Black and hard molding | Black and hard molding | Black and hard molding | Black and hard molding | Black and hard molding | Black and hard molding |
| Ratio of weight reduction after four-hour boiling (%) | 34.76 | 12.86 | 16.13 | 16.32 | 12.7 | 71.42 | 13.49 |

As shown in Table 4, compositions containing any plant-derived element were cured by applying heat/pressure thereto to form plastic-like moldings. Particularly, when Wattle Tannin was used as the condensed tannin (samples 14 to 17 and 19), the samples showed a ratio of weight reduction in a range of 10% or more and less than 20% not depending on the kinds of elements and thus showed high water resistance. When Quebracho Tannin was used as the condensed tannin, the compositions (samples 13 and 18) showed a result of lower water resistance than the water resistance of compositions prepared by using Wattle Tannin.

Form this Example, it was found that a molding having excellent water resistance could be easily obtained even when a rice husk powder or a bamboo powder was used as a raw material. Therefore, according to the present invention, a plastic-like molding can be produced by using agricultural waste.

### [Example 5] Use of element containing condensed tannin

When the acacia bark powder that contained condensed tannin in high content was used as an element, in order to ascertain whether a composition was cured or not by only adding sucrose, a plurality of compositions having a different mixing ratio were prepared by using the acacia bark powder and sucrose. Moldings were produced under conditions shown in Table 5 and water resistance of the moldings was evaluated. The results are shown in Table 5.
[Table 5]

**Table 5 Use of element (acacia bark powder) containing condensed tannin**

| Sample No. | 20 | 21 | 22 |
|---|---|---|---|
| Element | Acacia bark 10 g | Acacia bark 10 g | Acacia bark 10 g |
| Monosaccharide/oligosaccharide | Sucrose 2 g | Sucrose 4 g | Sucrose 8 g |
| Content ratio of condensed tannin (wt%) | 25.0% | 21.4% | 16.7% |
| Content ratio of monosaccharide/oligosaccharide(wt%) | 16.7% | 28.6% | 44.4% |
| Condensed tannin : Monosaccharide/oligosaccharide | 1:0.67 | 1:1.3 | 1:2.7 |
| Preparation method | Wet mixing | | |
| | • Dissolving sucrose in 10 g of water (hot water bath) | | |
| | • Mixing the water solution with acacia bark powder, followed by drying at 105°C for 2.5 hours | | |
| Hot-press conditions | 200°C 4 MPa [40.8 kgf/cm²] 10 minutes | | |
| State after hot-press | Black and hard molding | Black and hard molding | Black and hard molding |
| Ratio of weight reduction after four-hour boiling (%) | 11.13 | 9.74 | 27.28 |

As shown in Table 5, when the acacia bark powder (containing 30% by weight of condensed tannin) was used, the compositions prepared by adding only sucrose to the acacia bark powder were cured by applying heat/pressure thereto to form plastic-like moldings. From this result, it was found that when the element originally containing condensed tannin was used, the condensed tannin in the element could be used for the curing reaction. When a content ratio of the condensed tannin was 16.7% by weight (sample 22), a ratio of weight reduction was about 27%, whereas, when a content ratio of the condensed tannin was 20% by weight or more (sample 20 and sample 21), a ratio of weight reduction was around 10%.

### [Example 6] Study on temperature at the time of applying pressure and mixing method

Moldings were produced by using the acacia bark powder and sucrose under conditions shown in Table 6, and water resistance of the moldings was evaluated. The results are shown in Table 6.
[Table 6]

**Table 6 Change in temperature and change in mixing method**

| Sample No. | 23 | 24 | 21 | 25 |
|---|---|---|---|---|
| Element | Acacia bark 10 g | Acacia bark 10 g | Acacia bark 10 g | Acacia bark 10 g |
| Monosaccharide/oligosaccharide | Sucrose 4 g | Sucrose 4 g | Sucrose 4 g | Sucrose 4 g |
| Preparation method | wet mixing | | | Powder mixing |
| | • Dissolving sucrose in 10 g of water (hot water bath) | | | |
| | • Mixing the solution with acacia bark powder, followed by drying at 105 to 107°C for 1 to 2.5 hours | | | |
| Hot-press temperature (°C) | 160 | 180 | 200 | 200 |
| Hot-press time (minute) | 10 | 10 | 10 | 10 |
| Pressing pressure (MPa) | 4 | 4 | 4 | 4 |
| State after hot-press | Pale brown and hard molding | Dark brown and hard molding | Black and hard molding | Black and hard molding |
| Ratio of weight reduction after four-hour boiling (%) | Disintegrated | 30.04% | 9.74 | 15.37 |
| Remarks | Content ratio of condensed tannin: 21.4% by weight; content ratio of monosaccharide/oligosaccharide: 28.6% by weight | | | |
| | Weight ratio of condensed tannin and monosaccharide/oligosaccharide 1 : 1.3 | | | |

As shown in Table 6, when pressure was applied to the acacia bark and sucrose at heating temperatures of 160°C, 180°C, and 200°C, moldings were obtained from every composition.

However, a molding (sample 23) obtained under heat and pressure conditions at 160° was broken apart during boiling treatment. Moldings obtained under heat and pressure conditions at 180°C and 200°C were plastic-like and shapes of these moldings were retained after four-hour boiling treatment. A ratio of weight change after boiling treatment was about 30% at a temperature of 180°C (sample 24), and about 10% at a temperature of 200°C in the case of wet mixing (sample 21) and about 15% at a temperature of 200°C in the case of powder mixing (sample 25).

From these results, it was found that when a molding having high water resistance was desired to be obtained in a short time, the heating temperature was preferably 180°C or more and more preferably 200°C. As the mixing method, it was found that the wet mixing was more preferable than the powder mixing. A molding obtained from the sample 21 was black, had a thickness of about 0.28 cm, a weight of about 12.5 g, and a density of about 1.15 g/cm³, and was tough. A rectangular-shaped test specimen (measuring about 8 cm × about 1 cm, and a thickness of 0.3 to 0.4 cm) was produced in the same conditions as in the sample 21 and a bending test was carried out. As a result, values of a bending strength of 40 MPa and a Young's modulus of bending of 6.5 GPa were obtained.

### [Example 7] Study on kinds of saccharides

A plurality of compositions were produced by using the acacia bark powder and various saccharides. Moldings of the compositions were prepared under conditions shown in Table 7 and water resistance of the moldings was evaluated. The results are shown in Table 7.
[Table 7]

**Table 7 Change in kinds of saccharides**

| Sample No. | 26 | 27 | 21 | 28 | 29 | 30 |
|---|---|---|---|---|---|---|
| Element | Acacia bark 10 g | Acacia bark 10 g | Acacia bark 10 g | Acacia bark 10 g | Acacia bark 10 g | Acacia bark 10 g |
| Saccharide (monosaccharide, oligosaccharide, or polysaccharide) | Maltose 4 g | Lactose 4 g | Sucrose 4 g | Fructose 4 g | Glucose 4 g | Dextrin 4 g |
| Preparation method | Wet mixing | | Wet mixing | | | |
| | • Dissolving saccharide in 10 to 15 g of water (hot water bath) | | • Dissolving saccharide in 10 g of water (hot water bath) | | | |
| | • Mixing the water solution with acacia bark powder, followed by drying at 50°C for 15 hours and further 105°C for 2.5 hours | | • Mixing the water solution with acacia bark powder, followed by drying at 105 to 107°C for 1 to 2.5 hours | | | |
| Hot-press conditions | 200°C 4 MPa [40.8 kgf/cm²] 10 minutes | | | | | |
| State after hot-press | Black and hard molding | [Black and hard molding | Black and hard molding | Black and hard molding | Black and hard molding | Pale brown and brittle molding |
| Ratio of weight reduction after four-hour boiling (%) | 21.89 | 23.41 | 9.74 | 8.87 | 11.2 | Not tested because the molding was easy to be disintegrated in normal conditions |
| Remarks | Content ratio of condensed tannin: 21.4% by weight; content ratio of saccharide: 28.6% by weight; Weight ratio of condensed tannin and saccharide 1 : 1.3 | | | | | |

As seen from the Table 7, when monosaccharides (fructose and glucose) and disaccharides (maltose, lactose, and sucrose) were used as saccharides, every composition was cured and plastic-like moldings were obtained. On the contrary, when a polysaccharide (dextrin) was used, even when heat/pressure were applied to the compositions, only a brittle molding was obtained, and therefore, a plastic-like molding could not be obtained.

Among the monosaccharides and the disaccharides, particularly, when glucose, fructose, and sucrose were used, moldings having excellent water resistance were obtained.

### [Example 8] Addition of acid catalyst (sodium dihydrogen phosphate)

To compositions prepared by using the cellulose filter paper powder, the condensed tannin (Wattle Tannin or Quebracho Tannin), and sucrose, an acid catalyst (sodium dihydrogen phosphate) was added and an effect of addition was ascertained. The results are shown in Table 8.
[Table 8]

**Table 8 Addition of acid catalyst (sodium dihydrogen phosphate)**

| Sample No. | 31 | 32 | 33 | 34 | 35 |
|---|---|---|---|---|---|
| Element | Cellulose powder 5 g | Cellulose powder 5 g | Cellulose powder 5 g | Cellulose powder 5 g | Cellulose powder 5 g |
| Condensed tannin | Tannic acid ME 4 g | Tannic acid ME 4 g | Tannic acid ME 4 g | Tannic acid KT 4 g | Tannic acid KT 4 g |
| Monosaccharide/oligosaccharide | Sucrose 2 g | Sucrose 2 g | Sucrose 2 g | Sucrose 2 g | Sucrose 2 g |
| Acid catalyst (sodium dihydrogen phosphate) | - | 0.2 g | - | - | 0.2 g |
| Content ratio of condensed tannin (wt %) | 36.4% | 35.7% | 36.4% | 36.4% | 35.7% |
| Content ratio of monosaccharide/oligosaccharide (wt%) | 18.2% | 17.9% | 18.2% | 18.2% | 17.9% |
| Content ratio of acid catalyst (wt%) | - | 1.79% | - | - | 1.79% |
| Condensed tannin : Monosaccharide/oligosaccharide | 1:0.5 | 1:0.5 | 1:0.5 | 1:0.5 | 1:0.5 |
| Preparation method | Powder mixing | Powder mixing | Powder mixing | Powder mixing | Powder mixing |
| Hot-press temperature (°C) | 200 | 200 | 200 | 200 | 200 |
| Hot-press time (minute) | 5 | 5 | 10 | 10 | 10 |
| Pressing pressure (MPa) | 4 | 4 | 4 | 4 | 4 |
| State after hot-press | Dark brown and hard molding | Black and hard molding | Black and hard molding | Black and hard molding | Black and hard molding |
| Ratio of weight reduction after four-hour boiling (%) | Disintegrated | 13.76 | 11.37 | 36.69 | 17.33 |

As shown in Table 8, when time for applying heat/pressure was set to 5 minutes, a sample 31, to which the acid catalyst was not added, was not sufficiently cured and a molding was disintegrated during boiling treatment, whereas, a plastic-like molding having water resistance was obtained from the sample 32, to which 0.2 g of an acid catalyst was added. A ratio of weight reduction in the sample 32 after the boiling treatment was 10% or more and less than 20%. The sample 32 showed water resistance close to a sample 33, which was produced by applying heat/pressure for 10 minutes without the acid catalyst. A sample 34, which was prepared by using Quebracho Tannin, showed a ratio of weight reduction of more than 35% even when time for applying heat/pressure was 10 minutes, whereas, a ratio of weight reduction in the composition (sample 35), in which 0.2 g of the acid catalyst was added to the composition of the sample 34, was decreased to 10% or more and less than 20%.

From this Example, it was revealed that the time for applying heat/pressure could be reduced by half by adding the acid catalyst. It was revealed that water resistance could be improved by adding the acid catalyst even when a molding having excellent water resistance was difficult to obtain.

### [Example 9] Study on addition and additive amount of acid catalyst (citric acid) and use of inorganic element

Regarding compositions prepared by using the cellulose filter paper powder or the acacia bark powder or, an inorganic element, calcium carbonate powder as elements, an acid catalyst (citric acid) was added and an effect of the addition was ascertained. The results are shown in Table 9.
[Table 9]

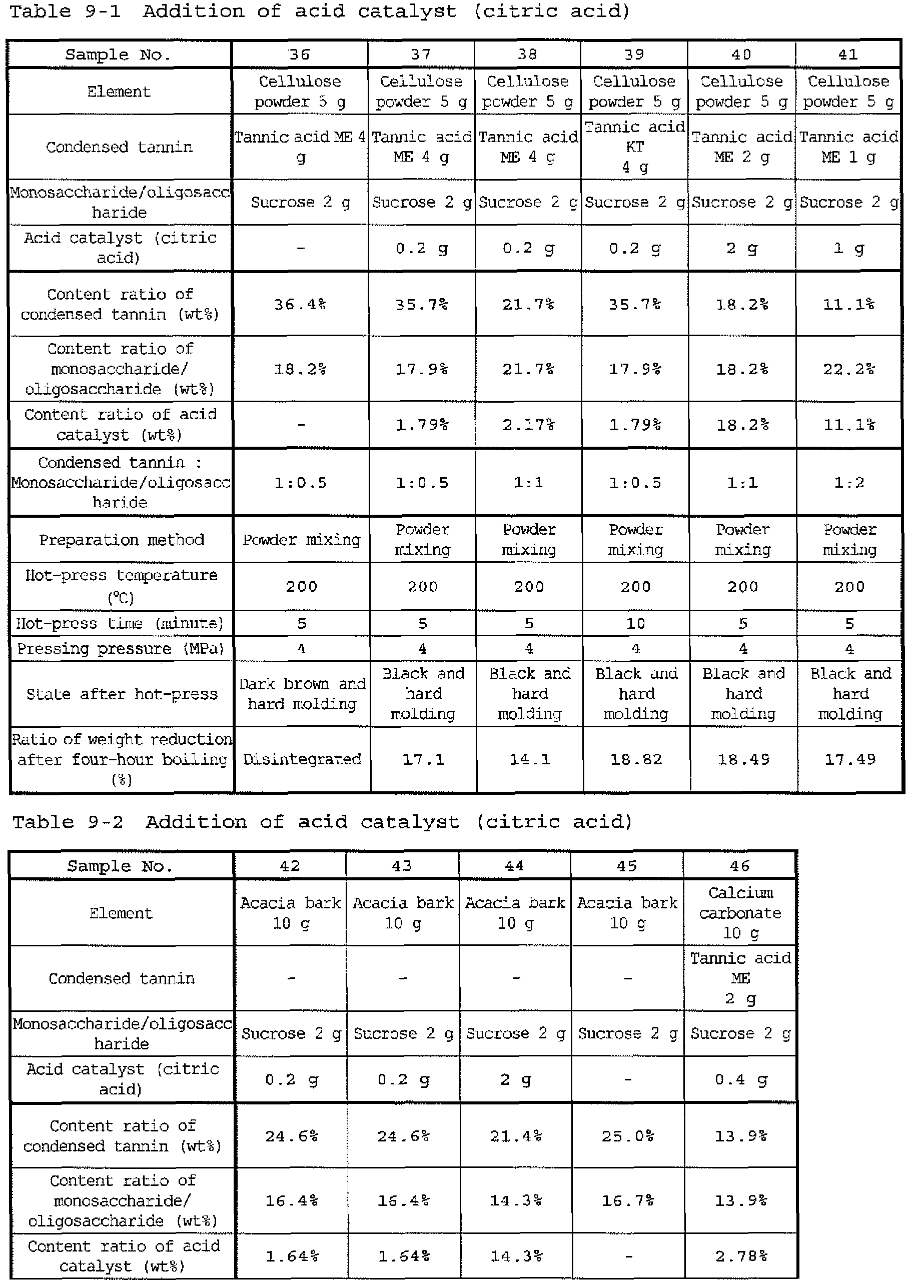

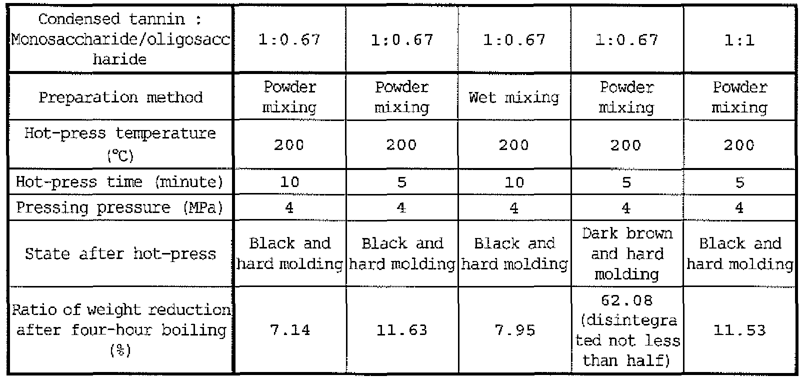

As shown in Table 9-1, when time for applying heat/pressure was set to 5 minutes, a sample 36 without containing the acid catalyst was not sufficiently cured and disintegrated during boiling treatment, whereas, a composition (sample 37), in which 0.2 g of the acid catalyst was added to the sample 36, formed a plastic-like molding having water resistance and a ratio of weight reduction after the boiling treatment was 10% or more and less than 20%. A composition (sample 38) having a lower content ratio of Wattle Tannin than that of the sample 37 also had a ratio of weight reduction after the boiling treatment of 10% or more and less than 20%. From these results, it was revealed that, when citric acid was used as the acid catalyst, the curing reaction was accelerated as in the case of the phosphate catalyst, and the time for applying heat/pressure could be reduced by half.

In addition, a composition (sample 39) prepared by using Quebracho Tannin was sufficiently cured in the time for applying heat/pressure of 10 minutes and a molding having excellent water resistance could be obtained.

Compared with the sample 38, a composition (sample 40) prepared by setting an additive amount of the acid catalyst to 10 times and a composition (sample 41) in which an additive amount of the acid catalyst was set to 5 times and an additive amount of Wattle Tannin was set to half also had a ratio of weight reduction after the boiling treatment of 10% or more and less than 20%.

Therefore, significant difference in water resistance performance was not observed when the additive amount of citric acid was increased, and thus, it was found that sufficient curing acceleration effect was obtained by adding only a small amount of citric acid.

As shown in Table 9-2, when a test for applying heat/pressure was carried out for compositions prepared by using the acacia bark powder as an element, not adding condensed tannin, and adding sucrose and the acid catalyst, plastic-like moldings having high water resistance were obtained. For a molding (sample 42) produced by adding 0.2 g of the acid catalyst and setting time for applying heat/pressure of 10 minutes, a ratio of weight reduction after boiling treatment was 7% or more and less than 8% and, for a molding (sample 43) produced by reducing time for applying heat/pressure to 5 minutes, a ratio of weight reduction was 10% or more and less than 20%.

On the contrary, for a composition (sample 45) not adding the acid catalyst, a ratio of weight reduction was 60% or more at the time for applying heat/pressure of 5 minutes, and thus, a molding having high water resistance could not be obtained in a short time.

From these results, when the element originally containing condensed tannin was used, it was revealed that the curing reaction was accelerated by the acid catalyst and the time for applying heat/pressure could be reduced by half.

Compared with the sample 42, a composition (sample 44) prepared by setting an additive amount of the acid catalyst to 10 times and mixing in a wet state had a ratio of weight reduction after boiling treatment of 7% or more and less than 8% as in the sample 42. Therefore, also, when an element was acacia bark, significant difference in water resistance performance was not observed when an additive amount of citric acid was increased, and thus, it was found that sufficient curing acceleration effect was obtained by adding only a small amount of citric acid.

Also, a composition (sample 46) prepared by using calcium carbonate powder as an element was cured by applying heat/pressure thereto to form a plastic-like molding and a ratio of weight reduction after boiling treatment was 10% or more and less than 20%. From these results, it was found that, when the element was a substance other than a plant-derived material, the plastic-like molding could be obtained by hot pressing.

The above sodium dihydrogen phosphate and citric acid exert an excellent effect in a slight amount and significant difference in effect is not observed when the additive amount is increased, and thus, it is found that the acid itself does not react with condensed tannin and saccharide and acts as the catalyst.

In Patent Document 1 (WO 2010/001988) described above, the present inventor ascertains that a composition made of citric acid and a plant-derived material is cured by applying heat/pressure. At the same time, in Example 10 in Patent Document 1, the present inventor ascertains that a mixture of tannin extracted from an acacia bark and citric acid is not cured by applying heat/pressure, and citric acid is reacted with a substance other than tannin. Therefore, it is found that the acid plays a completely different role between the composition of the present invention and the composition in Patent Document 1.

In Example 11 in Patent Document 1, the present inventor have tried to produce a molding by preparing a composition by mixing 10 g of a filter paper powder, 2.5 g of a citric acid powder, and 5 g of a saccharide powder, filling the composition in a mold, and hot-pressing (at 200°C under 4 MPa for 10 minutes). In order to ascertain whether water resistance of the obtained molding was improved or not by adding condensed tannin to the composition (a composition not containing condensed tannin) of Example 11 in Patent Document 1, a sample in which a condensed tannin (Wattle Tannin) powder was added to a base consisting of a filter paper powder, a citric acid powder and a saccharide powder (sucrose or xylose) and a sample in which the condensed tannin powder was not added to the base were prepared. Thereafter, each sample was filled into the mold and hot pressed. Water resistance of the obtained molding was tested. The result was shown in Table 10.

[Table 10]

**Table 10 Comparison of water resistance between presence and absence of condensed tannin**

| Sample No. | 47 | 48 | 49 | 50 |
|---|---|---|---|---|
| Element | Filter paper powder 10 g | Filter paper powder 10 g | Filter paper powder 10 g | Filter paper powder 10 g |
| Condensed tannin | - | Tannic acid ME 2.5 g | - | Tannic acid ME 2.5 g |
| Monosaccharide/oligosaccharide | Sucrose 5 g | Sucrose 5 g | Xylose 5 g | Xylose 5 g |
| Acid | Citric acid 2.5 g | Citric acid 2.5 g | Citric acid 2.5 g | Citric acid 2.5 g |
| Preparation method | Powder mixing | Powder mixing | Powder mixing | Powder mixing |
| Hot-press temperature (°C) | 200 | 200 | 200 | 200 |
| Hot-press time (minute) | 10 | 10 | 10 | 10 |
| Pressing pressure (MPa) | 4 | 4 | 4 | 4 |
| State after hot-press | Blackish brown and hard molding | Black and hard molding | Blackish brown and hard molding | Black and hard molding |
| Ratio of weight reduction after four-hour boiling (%) | 14.02 | 10.90 | 21.67 | 9.88 |

As shown in Table 10, regardless of kinds of saccharides, ratios of weight reduction in the obtained moldings from compositions (samples 48 and 50) prepared by adding condensed tannin were lower than the ratios of weight reduction in the obtained moldings from compositions (samples 47 and 49) prepared by not adding condensed tannin. Particularly, when xylose was used as saccharide, the ratios of weight reduction were reduced to less than half by adding the condensed tannin. Reduction in the ratios of weight reduction means that water resistance of the moldings is improved by adding the condensed tannin. Therefore, from this experiment, it was ascertained that water resistance of the moldings was improved and tougher plastic-like moldings were obtained by adding the condensed tannin.

In the above experiment, how water resistance varied when an additive amount of citric acid was reduced was studied. Specifically, the same experiment was carried out except that the additive amount of citric acid was reduced from 2.5 g to 0.4 g. Also the same experiment was carried out except that sodium dihydrogen phosphate was used instead of citric acid. The results are shown in Table 11.

**[Table 11]**

| Table 11. Comparison of water resistance between presence and absence of condensed tannin when small amount of acid added | | | | | | |
|---|---|---|---|---|---|---|
| Sample No. | 51 | 52 | 53 | 54 | 55 | 56 |
| Element | Filter paper powder 10 g | Filter paper powder 10 g | Filter paper powder 10 g | Filter paper powder 10 g | Filter paper powder 10 g | Filter paper powder 10 g |
| Condensed tannin | - | Tannic acid ME 2.5 g | Tannic acid ME 2.5 g | - | Tannic acid ME 2.5 g | Tannic acid ME 2.5 g |
| Monosaccharide/oligosaccharide | Sucrose 5 g | Sucrose 5 g | Sucrose 5 g | Xylose 5 g | Xylose 5 g | Xylose 5 g |
| Acid | Citric acid 0.4 g | Citric acid 0.4 g | Sodium dihydrogen phosphate 0.4 g | Citric acid 0.4 g | Citric acid 0.4 g | Sodium dihydrogen phosphate 0.4 g |
| Preparation method | Powder mixing | Powder mixing | Powder mixing | Powder mixing | Powder mixing | Powder mixing |
| Hot-press temperature (°C) | 200 | 200 | 200 | 200 | 200 | 200 |
| Hot-press time (minute) | 10 | 10 | 10 | 10 | 10 | 10 |
| Pressing pressure (MPa) | 4 | 4 | 4 | 4 | 4 | 4 |
| State after hot-press | Blackish brown and hard molding | Black and hard molding | Black and hard molding | Brown and hard molding | Black and hard molding | Black and hard molding |
| Ratio of weight reduction after four-hour boiling (%) | 46.13 | 11.14 | 8.32 | Disintegrated during boiling | 9.46 | 5.42 |

As shown in Table 11, when the additive amount of citric acid was 0.4 g, water resistance of moldings from compositions (samples 51 and 54) not containing condensed tannin was significantly deteriorated compared with the moldings from the compositions (samples 47 and 49 in Table 10) containing 2.5 g of citric acid. From this result, it is considered that, in the compositions (samples 47 and 49) disclosed in Patent Document 1, citric acid acts as not a catalyst but a substrate of the curing reaction.

On the contrary, even when the additive amount of citric acid was 0.4 g, the moldings obtained from the compositions (samples 52 and 55) containing condensed tannin showed a similar ratio of weight reduction compared with the moldings obtained from the compositions (samples 48 and 50 in Table 10) containing 2.5 g of citric acid. From this result, in the composition containing condensed tannin, it is found that the composition is sufficiently cured even when a small amount of citric acid is added, and it is considered that citric acid acts as a catalyst.

Ratios of weight reduction in the obtained moldings from compositions (samples 53 and 56) in which 0.4 g of citric acid was changed to 0.4 g of sodium dihydrogen phosphate were lower than the ratios of weight reduction in the obtained moldings from the sample 52 and the sample 55. From this result, it is found that, in a composition containing condensed tannin, an acid acting as a catalyst is not limited to a polycarboxylic acid such as citric acid and sodium dihydrogen phosphate functions as an excellent acid catalyst.

### [Example 10] Use as adhesive

Using a composition according to the present invention, woods were bonded with each other. A 3 ply plywood was produced by using an air-dried south-sea wood veneer sheet (measuring 30 × 30 × 0.16 cm) and a mixture of an acacia bark powder and a sucrose powder (60 mesh pass) in a weight ratio of 7 : 3. The mixture acting as an adhesive was uniformly sprayed on the veneer sheet using a sieve. The coating amount per one adhesive layer was set to 200 g/m². Heat and pressure conditions were as follow: a pressing pressure of 1 MPa, a pressing temperature of 200°C and a pressing time of 10 minutes. A strength test under normal conditions using a tensile shear test specimen and a warm and cold water immersion test of the obtained plywood were carried out in accordance with JAS. The results are shown in Table 12.

[Table 12]

**Table 12 Adhesion strength of 3 ply plywood made by using acacia bark powder and sucrose**

| | Test under normal conditions | Warm and cold water immersion test |
|---|---|---|
| Strength (MPa) | 0.97 | 0.51 |
| Standard deviation | 0.14 | 0.15 |
| Wood failure ratio (%) | 30 | 5 |

The composition used in this Example is made of 100% biomass-derived component, and it was ascertained that the composition could provide a product having high strength under normal condition and high water-resistant strength and could be used for an adhesive.

### [Example 11] Production of particleboard

While hot press was carried out using the mold in Examples described above when the moldings were produced, a trial of producing a formed body (cured body) was made by hot plate press without using the mold in the present Example. At present, in the production of a particleboard, small pieces of wood sprayed with a synthetic resin adhesive are formed, placed on a press stand, and then subj ected to an upper and lower press to produce the particleboard. It is considered to be very useful that a particleboard containing no toxic substance such as formaldehyde can be produced if the particleboard can be produced by using condensed tannin and a monosaccharide/oligosaccharide instead of a synthetic resin adhesive. It is possible to uniformly distribute the condensed tannin and the monosaccharide/oligosaccharide in wood particles by dissolving the condensed tannin and the monosaccharide/oligosaccharide in a solvent and spraying the obtained solution, and to produce the particleboard using the very same facility used in the production of a conventional particleboard. Therefore, the present invention has practical usefulness. Hereinafter, a production example of a particleboard that has the same procedure as the production of a conventional particleboard is shown.

### [Without acid catalyst]

First, 25.5 g of tannic acid ME and 25.5 g of sucrose (a weight ratio of 1 : 1) were dissolved in 50 g of water to prepare an aqueous solution. This aqueous solution was used as an adhesive, and sprayed on dry wood particles (a raw material was a recycled material: particles measuring about 0.3 to 0.8 mm in thickness, about 1 to 30 mm in width, and about 5 to 30 mm in length were used). An amount of the adhesive applied here was 20% in terms of solid content to the whole dried wood particle weight (namely, a weight ratio of wood particles : tannic acid ME : sucrose = 100 : 10 : 10). Thereafter, the wood particles were dried in an oven at 40°C for 20 hours in order to evaporate water.

Thereafter, a mat was formed by a forming box measuring 30 × 30 cm, and then subjected to hot plate press at a temperature of 200°C for 10 minutes. In the case of pressing, the thickness was controlled using a distance bar of 0.9 cm and a pressure of a press machine was set to 6.6 MPa. A target board dimension was 30 cm × 30 cm × 0.9 cm, and a target density was 0.8 g/cm³.

By using the above hot press, the particleboard could be produced. Regarding this board, a bending strength, a Young's modulus in bending, a peel strength, and a thickness swelling ratio by water absorption for 24 hours were measured in accordance with the methods specified in JISA5908 . The bending strength was 17.06 MPa; the Young's modulus in bending was 3.83 GPa; the peeling strength was 0.73 MPa; and the thickness swelling ratio by water absorption for 24 hours was 57.0%.

### [With acid catalyst]

First, 6.25 g of tannic acid ME, 37.5 g of sucrose, and 6.25 g of citric acid (a weight ratio of 1 : 6 : 1) were dissolved in 50 g of water to prepare an aqueous solution. This aqueous solution was used as an adhesive, and sprayed on dry wood particles (a raw material was a recycled material: particles measuring about 0.3 to 0.8 mm in thickness, about 1 to 30 mm in width, and about 5 to 30 mm in length were used). An amount of the adhesive applied here was 20% in terms of solid content to the whole dried wood particle weight (namely, a weight ratio of wood particles : tannic acid ME : sucrose : citric acid = 100 : 2.5 : 15 : 2.5). Thereafter, the wood particles were dried in an oven at 40°C for 20 hours in order to evaporate water.

Thereafter, a mat was formed by a forming box measuring 30 × 30 cm, and then subj ected to hot plate press at a temperature of 200°C for 10 minutes. In the case of pressing, the thickness was controlled using a distance bar of 0.9 cm and a pressure of a press machine was set to 6.6 MPa. A target board dimension was 30 cm × 30 cm × 0.9 cm, and a target density was 0.8 g/cm³.

By using the above hot press, the particleboard could be produced. Regarding this board, a bending strength, a Young's modulus in bending, a peel strength, and a thickness swelling ratio by water absorption for 24 hours were measured in accordance with the methods specified in JISA5908. The bending strength was 24.4 MPa; the Young' s modulus in bending was 4.07 GPa; the peeling strength was 1.6 MPa; and the thickness swelling ratio by water absorption for 24 hours was 14.9%.

From the results of Example 11, also regarding the production of the particleboard, it was found that a particleboard having excellent physical properties could be easily obtained when the acid catalyst was used together at the same time rather than when only condensed tannin and the monosaccharide/oligosaccharide were added.

When those containing a monosaccharide or an oligosaccharide in advance such as bagasse (squeezed residue of sugarcane) as an element are used, it is considered that a board having excellent physical properties can be produced by using only condensed tannin (and an acid catalyst, if necessary) or adding a smaller amount of saccharide. Since bagasse is agricultural waste, its effective utilization method has hitherto been groped. Although a trial of producing a board by a hot process method using bagasse is made, sufficient physical properties cannot be obtained only by using bagasse, and it is reported that poor adhesion arise even when an adhesive is used. This reason is considered that curing of an adhesive (formaldehyde-based) is suppressed by sucrose remaining in bagasse. In the present invention, it is considered that remaining sucrose reacts to the contrary. Therefore, it is possible to effectively utilize even a raw material which was considered to be difficult to be cured by an existing formaldehyde-based adhesive, like bagasse. Therefore, according to the present invention, agricultural waste such as bagasse can be used as a raw material of woody board, and also it is not necessary to use a formaldehyde-based adhesive. Therefore, it is considered that the high safety is achieved, thus contributing to effective utilization of agricultural waste.

From the results of each Example, according to the present invention, it is revealed that a resin having excellent water resistance can be obtained from only biological resource-derived substances and therefore application for a bioplastic that is derived from a 100% biomaterial can be expected. In the present invention, unlike conventional technology that uses a fossil resource-derived material, a saccharide obtained from plants such as sucrose can be used for curing condensed tannin. In addition, citric acid being used as an acid catalyst is also a natural product obtained by fermentation of glucose. Although sodium dihydrogen phosphate is derived from a fossil resource, sodium dihydrogen phosphate is highly safe because it is used as a food additive. As described above, the technology in which condensed tannin is cured by a substance being a natural product or having high safety is found out and thereby a tannin resin that is environment and human body friendly and/or is prepared by 100% natural product can be produced.

The condensed tannin is included in a bark in high content. However, applications of the bark are scarce and the bark is often disposed as agricultural waste. In the present invention, however, it has been found that a molding having excellent water resistance is obtained by adding saccharide such as sucrose to an acacia bark and applying heat/pressure, and therefore, agricultural waste can be used as a material in an easy procedure. In addition, by combing an acacia bark with bagasse being squeezed residue of sugarcane, a reaction of the condensed tannin and the monosaccharide/oligosaccharide that are components contained in the bark and the bagasse can be expected and a new lignocellulose material that utilizes raw material characteristics can be developed.

Moreover, the present invention relates to a new curing method of condensed tannin, and therefore, application for an existing resin material may be expected and, particularly, the present invention is applicable for an adhesive for wood and a bioplastic.

### INDUSTRIAL APPLICABILITY

According to the present invention, it is possible to obtain a plastic-like formed body (a plastic-like molding) and a woody formed body having excellent water resistance by a very simple step using a material which is easily available and inexpensive, without using a fossil product, and therefore, application for a bioplastic can be expected. Compared with an existing bioplastic, the above bioplastic is excellent in the point of environmental property, workability, or safety because the above bioplastic does not use a fossil resource at all and a plastic-like cured material is obtained without treatment such as chemical synthesis.

Since it is considered that a formed body produced by using a plant-derived material as an element also has biodegradability in its waste, it can be utilized as an environmentally friendly biomass material. The composition of the present invention contains condensed tannin having antimicrobial activity, and therefore, it is considered to be suited in tray for foods.

## Claims

1. A composition to be cured by applying heat/pressure thereto, comprising
an element in the form of powder or small pieces, and 8% by weight or more of condensed tannin and 8% by weight or more of a saccharide selected form the group consisting of a monosaccharide and an oligosaccharide.

2. The composition according to claim 1, wherein the composition comprises 10 to 50% by weight of the condensed tannin and 10 to 50% by weight of the saccharide.

3. The composition according to claim 1 or 2, further comprising an acid catalyst.

4. The composition according to any one of claims 1 to 3, wherein the condensed tannin is Wattle Tannin.

5. The composition according to any one of claims 1 to 4, wherein the saccharide is selected from the group consisting of sucrose, glucose, fructose, maltose, xylose, and lactose.

6. The composition according to any one of claims 1 to 5, wherein the acid catalyst is selected from the group consisting of a carboxylic acid, a phosphoric acid and a salt thereof.

7. The composition according to any one of claims 1 to 6, wherein the composition is a composition for production of a molding.

8. The composition according to any one of claims 1 to 6, wherein the composition is a composition for adhesion of wood.

9. A formed body obtained by applying heat/pressure to the composition according to any one of claims 1 to 6.

10. A method for producing a molding, the method comprising charging the composition according to any one of claims 1 to 6 into a mold, and applying heat to the composition to a temperature within a range from 160°C to 250°C, and applying pressure to the composition to a pressure within a range from 5 kgf/cm² to 70 kgf/cm².

11. A method for producing a formed body, the method comprising the step of: adding a solution comprising condensed tannin and a saccharide selected from the group consisting of a monosaccharide and an oligosaccharide to an element in the form of small pieces, followed by applying heat/pressure.

12. The method for producing a formed body according to claim 11, wherein the solution further comprises an acid catalyst.
